# EUROPEAN PATENT SPECIFICATION

(11) **EP 3 522 077 B1**
(45) Date of publication and mention of the grant of the patent: **27.07.2022**
(21) Application number: 19155055.7
(22) Date of filing: 01.02.2019
(51) Int. Cl.: G06K 19/077

(54) **FOAM-BASED RFID LABEL FOR TIRES**
SCHAUMBASIERTES RFID-ETIKETT FÜR REIFEN
ÉTIQUETTE RFID À BASE DE MOUSSE POUR PNEUMATIQUES

(30) Priority: 02.02.2018 US 201862625748 P; 31.01.2019 US 201916263096
(43) Date of publication of application: 07.08.2019
(73) Proprietor: FineLine Technologies, Norcross, GA 30071 (US)
(72) Inventor: BORGNA, Michael E., O'Fallon, MO 63368 (US); CASSIDY, Glenn M., O'Fallon, MO 63368 (US); UIJLENBROEK, Jos, 4061AJ Ophemert (NL)
(74) Representative: Nony

(56) References cited:
- US-A1- 2006 164 250
- US-A1- 2008 084 312
- US-A1- 2011 234 383
- US-A1- 2015 047 782
- US-A1- 2015 075 693

## Description

### TECHNICAL FIELD

The present invention relates generally to an RFID label for identifying, tracking, and/or sensing an article after manufacture, and more particularly, to foam-based RFID labels including an RFID device therein disposed between at least one foam layer and at least one layer of face material. In a particular application, the foam-based RFID label is configured to be affixed to a tire post-vulcanization and remain integral part of the tire thereafter further aiding in identifying, tracking, and/or sensing the tire.

### BACKGROUND

Articles are commonly monitored during manufacture and thereafter for inventory control purposes, distribution, selling, fleet management, and maintenance. A common practice in many fields is to apply a label (e.g., a bar coded label) to an article containing an identifier or other information associated with the article (e.g., a tire) having an identifier or other information associated with the article.

Tires and a wide array of other rubber-based articles can be subjected to one or more vulcanization processes in which the tire or tire components are fused or molded together. Vulcanization modifies the rubber-based composition by forming an extensive network of crosslinks within the rubber matrix, thereby significantly increasing the strength and durability of the article. Although numerous vulcanization techniques are known, many depending on the type of curing system in the rubber composition, nearly all techniques include the application of high pressure and elevated temperatures to the "green," i.e., non-vulcanized, rubber-based article.

Adhesive-based labels (e.g., bar coded labels) have been developed that can be applied to green rubber-based articles (eg., tires), which can provide information related to the article pre-vulcanization and somewhat during vulcanization. However, during vulcanization, these adhesive-based labels are often degraded due to high temperatures and pressures associated with vulcanization and further suffer from "line of sight" limitations in which a bar code reader must be place directly over the bar code in order to properly read the label.

While these adhesive-based labels (bar coded labels) are satisfactory in many respects, new adhesive labels (bar coded labels) are often required to be affixed to the vulcanized article due to the degradation of the original adhesive-based label during vulcanization. In any event multiple problems exist with the currently used adhesive-based labels. For example, adhesive labels applied pre-vulcanization are not able to remain inextricably linked during the lifetime of the tire, and this problem is further observed in the newly applied adhesive labels (bar coded labels) applied post-vulcanization of the rubber article as well. Specifically, vulcanized tires and/or other vulcanized rubber-based articles are subjected to considerable stress during use. Because most conventional adhesive-based labels (bar coded label) are relatively rigid and inflexible, the constant flexing, expansion, and contraction (e.g., associated with movement, temperature, external factors such as temperature, debris, bumps, water, snow, ice, inflation pressure) of the vulcanized rubber-based articles often degrade the adhesive bond between the adhesive-based label (bar coded labels) and the vulcanized rubber-based article. Furthermore and as mentioned above, these adhesive labels suffer from "line of sight" limitations in which a bar code reader must be placed directly over the bar code in order to properly read the label.

US 2015/0075693 discloses a method of affixing a RFID package based on rubber on a vulcanized tire, either by mechanical, magnetic or adhesive means.

US 2008/084312 and US 2011/234383 concern RFID tags and assembly method aiming not short out said tags when affixed to foil or containers containing liquid or in harsh operating environments. US 2015/047782 describes a flexible layer in a tire for accommodating RFID tags.

Thus, what is needed is an alternative to conventional adhesive labels (eg .bar coded labels) that overcome the problems discussed above, and more specifically, what is needed are foam based RFID labels and methods of affixing these labels to vulcanized tires such that these foam based RFID labels remain attached to a rubber-based article post-vulcanization (e.g., vulcanized tires) while concurrently providing information about the tire during distribution, while in inventory, and/or during the tire's lifetime without the "line of sight" limitations of the currently used adhesive labels.

### SUMMARY

The invention is defined by the set of the appended claims. In one aspect, the inventive concepts disclosed herein are directed to a method of installing a RFID label in or on a vulcanized tire according to claim 1.

In yet another aspect, a vulcanized tire according to claim 9 comprises a foam-based RFID label.

The foam-based RFID label and methods disclosed herein can be used to track production and inventory, among other purposes during the lifetime of the article.

The detailed description which follows, is intended to provide an overview or framework for understanding the nature and character of the invention as it is claimed. The accompanying drawings are included to provide a further understanding of the invention, and are incorporated in and constitute a part of this specification.

### BRIEF DESCRIPTION OF THE DRAWINGS

These and other features, aspects and advantages of the present invention are better understood when the following detailed description of the invention is read with reference to the accompanying drawings, in which:
FIG. 1 schematically depicts a first example of the foam-based RFID label;
FIG. 2 is another schematic depiction of the first example of the foam-based RFID label;
FIG. 3 schematically depicts a second example of the foam-based RFID label;
FIG. 4 depicts a tire mold and an insert positioned therein for forming a recess in a tire sidewall for subsequent affixing of a foam-based RFID label therein;
FIGs. 5A, 5B, and 5C sequentially depict providing a tire with a recess (FIG. 5A), inserting the foam-based RFID label within the recess and affixing the label to the tire (FIG. 5B), and subsequently concealing the affixed foam-based RFID label within the tire with a concealing composition (FIG. 5C);
FIG. 6 depicts a tire having a foam-based RFID label affixed to a recess formed with a tire sidewall; and
FIG. 7 depicts a tire having a foam-based RFID label affixed to an outermost surface of a tire sidewall without a recess being formed on the tire.

### DETAILED DESCRIPTION

The present invention will now be described more fully hereinafter with reference to the accompanying drawings in which examples of the invention are shown. However, the invention is defined by the scope of the appended claims.

RFID labels according to the present invention enable various tire tracking solutions that include electronic identification provisions such as, for example, RFID devices incorporated in/onto a foam substrate(s)/layer(s) such that the labels are configured to withstand temperatures and stresses associated with a wide variety of tire uses.

The foam-based RFID label can be affixed to and/or incorporated on the sidewall of a wide array of tires. Depending on the type of tire, the stretch of the tire (sidewall) or the use of the tire (e.g. racing tires), the thickness of the foam substrate may vary. For example, the thicker the tire sidewall, the lesser the stress and thinner the foam substrate may be.

As will be appreciated, tires are typically used in combination with rims of a vehicle. The rubber-based tire provides support and gripping for the vehicle with a road or ground surface. The foam-based RFID label may be used with bias tires, belted bias tires, radial tires, solid tires, semi-pneumatic tires, pneumatic tires, airless tires, truck and bus tires, airplane tires, agro tires, racing tires, mining tires, etc.

In certain expamples the foam-based RFID label can withstand conditions/stresses typically associated with the environment of the article (tire) encountered throughout its lifetime. The articles disclosed herein constantly flex, expand, contract, and/or are constantly exposed to other external factors xternal factors such as debris, bumps, water/rain, snow, and/or ice and can withstand these throughout the lifetime of its attachment to the tire.

As discussed further below, the foam-based RFID label generally includes at least one RFID device. The at least one RFID device generally includes an antenna for wirelessly transmitting and/or receiving RF signals and analog and/or digital electronics operatively connected thereto. The RFID device can include passive RFID devices, or active or semi-passive RFID devices including a battery or other power source. The electronics can be implemented via an integrated circuit (IC) or microchip or other suitable electronic circuit and inlay include, for example, communications electronics, data memory, control logic, etc.

The RFID device can operate in a variety of frequency ranges including, but not limited to, a low frequency (LF) range (i.e., from approximately 30 kHz to approximately 300 kHz), a high frequency (HF) range (i.e., from approximately 3 MHz to approximately 30 MHz) and an ultra-high frequency (UHF) range (i.e., from approximately 300 MHz to approximately 3 GHz). A passive device can operate in any one of the aforementioned frequency ranges. In particular, for passive devices, LF systems can operate at about 124 kHz, 125 kHz or 135 kHz, HF systems can operate at about 13.56 MHz, and UHF systems can use a band from 8601MHz to 960MHz. Alternately, passive device systems can use 2.45 GHz and other areas of the radio spectrum. Active RFID devices can operate at about 455 MHz, 2.45 GHz, or 5.8 GHz. Semi-passive devices can operate at a frequency of about 2.4 GHz.

The read range of the RFID device (i.e., the range at which the RFID reader can communicate with the RFID device) can be determined by the type of device (i.e., active, passive, etc). Passive LF RFID devices (also referred to as LFID or LowFID devices) can typically be read from within approximately 12 inches (0.33 meters); passive HF RFID devices (also referred to as HFID or HighFID devices) can typically be read from up to approximately 3 feet (1 meter); and passive UHF RFID devices (also referred to as UHFID devices) can typically be read from approximately 10 feet (3.05 1neters) or more. One factor influencing the read range for passive RFID devices is the method used to transmit data from the device to the reader, i.e., the coupling mode between the device and the reader - which can be either inductive coupling or radiative/propagation coupling. Passive LFID devices and passive HFID devices can use inductive coupling between the device and the reader, whereas passive UHFID devices can use radiative or propagation coupling between the device and the reader.

Alternatively, in radiative or propagation coupling applications (e.g., as are conventionally used by passive UHFID devices), rather than forming an electromagnetic field between the respective antennas of the reader and device, the reader can emit electromagnetic energy that illuminates the device. In turn, the device gathers the energy from the reader via an antenna, and the device's IC or microchip uses the gathered energy to change the load on the device antenna and reflect back an altered signal, i.e., backscatter. UHFID devices can communicate data in a variety of different ways, e.g., increase the amplitude of the reflected wave sent back to the reader (i e., amplitude shift keying), shift the reflected wave out of the phase received wave (i.e., phase shift keying), or change the frequency of the reflected wave (i.e., frequency shift keying). The reader in turn picks up the backscattered signal and converts the altered wave into data understood by the reader or adjunct computer.

The antenna employed in the RFID device can be affected by numerous factors, e.g., the intended application, the type of device (i.e., active, passive, semi-active, etc.), the desired read range, the device-to-reader coupling mode, the frequency of operation of the device, etc. For example, insomuch as passive LFID devices are normally inductively coupled with the reader, and because the voltage induced in the device antenna is proportional to the operating frequency of the device, passive LFID devices can be provisioned with a coil antenna having many turns in order to produce enough voltage to operate the device IC or microchip. Comparatively, a conventional HFID passive device can be provisioned with an antenna which is a planar spiral (e.g., with 5 to 7 turns over a credit-card-sized form factor), to provide read ranges on the order of tens of centimeters. HFID antenna coils can be less costly to produce (e.g., compared to LFID antenna coils), since they can be made using techniques relatively less expensive than wire winding, e.g, lithography or the like. UHFID passive devices can be radiatively and/or propagationally coupled with the reader antenna and consequently can employ conventional dipole-like antennas.

The foam-based RFID label of the present invention can utilize any of the aforementioned RFID devices, as well as others not specifically mentioned. In one example the RFID device is a passive or active device.

The foam-based RFID label according to the invention can be installed during tire manufacture (after vulcanization) such that the label becomes as integral, inseparable part of the tire. It should be noted that the phrases "during manufacture" and "during tire manufacture" as used herein specifically refer to any processes occurring post-vulcanization of the tire. In the event that the foam-based RFID label becomes inoperable, breaks or otherwise fails, the existing label can be removed (e.g., by milling out the old label) and inserting a new label into the existing recess of the article/vulcanized tire.

The foam-based RFID label can also be affixed to and/or incorporated within a wide array of tires. As discussed in detail below, the label can be incorporated into the sidewall to facilitate reading from alongside the tire as well as avoid damage impact damage.

The foam-based RFID label is suitable for use with other articles, including other rubber-based and non-rubber-based articles. Non-limiting examples of other rubber-based articles include suspension components, cushions, shoe soles, hoses, hockey pucks, conveyor belts, musical mouth pieces, bowling balls, rubber mats, jewelry molds, etc., and may be affixed to these articles using the installation methods further disclosed herein.

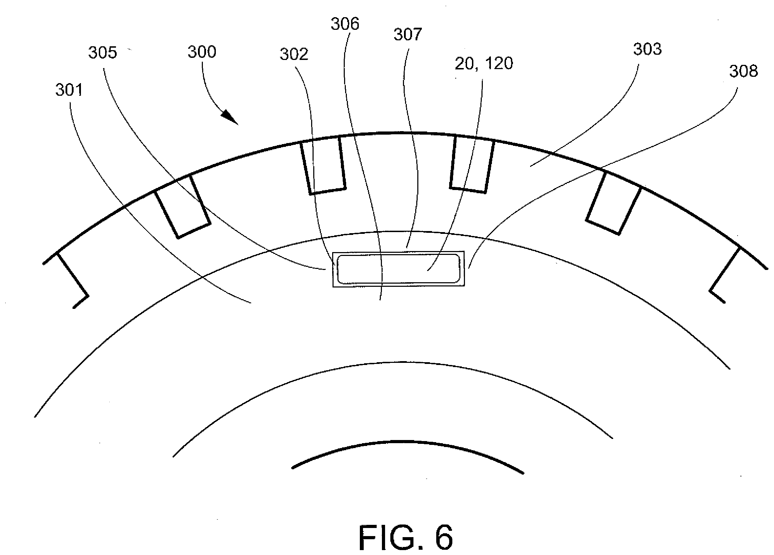

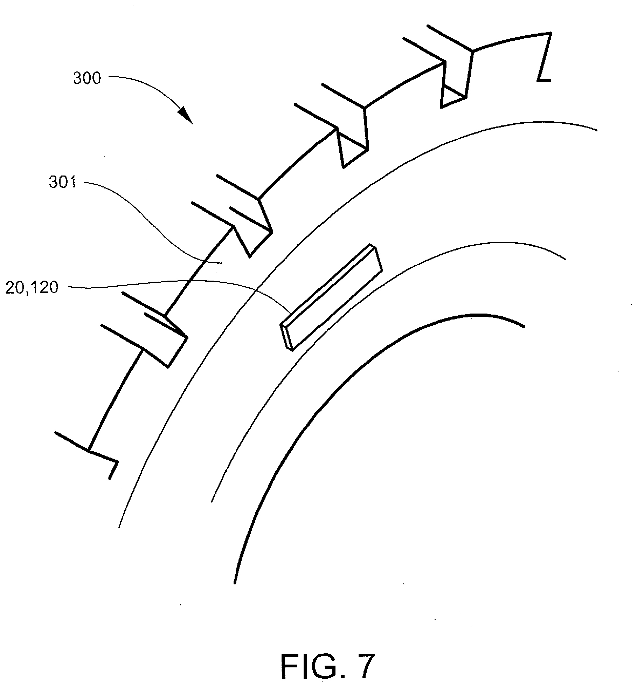

FIGs. 6 and 7 depict the foam-based RFID labels 20, 120 disclosed herein affixed to a tire 300. FIG. 6 specifically depicts a tire 300 having an outer sidewall 301 and an inner sidewall (not shown) opposite the outer sidewall. A recess 302 is formed on the outer sidewall 302 between the tire tread 33 and the portion of the tire immediately adjacent the tire rim with one of the foam-based RFID labels 20, 120 being permanently affixed within the recess and substantially flush or slightly depressed relative to other portions 305, 306, 307, 308 of the sidewall immediately adjacent recess 302. In certain aspects and instead of forming a recess on the tire sidewall, FIG. 7 depicts one of the foam-based RFID labels 20, 120 directly and permanently affixed to (on top of) a tire wall 301 such that the foam-based RFID label protrudes above and/or extends beyond an outermost surface of the sidewall 301.

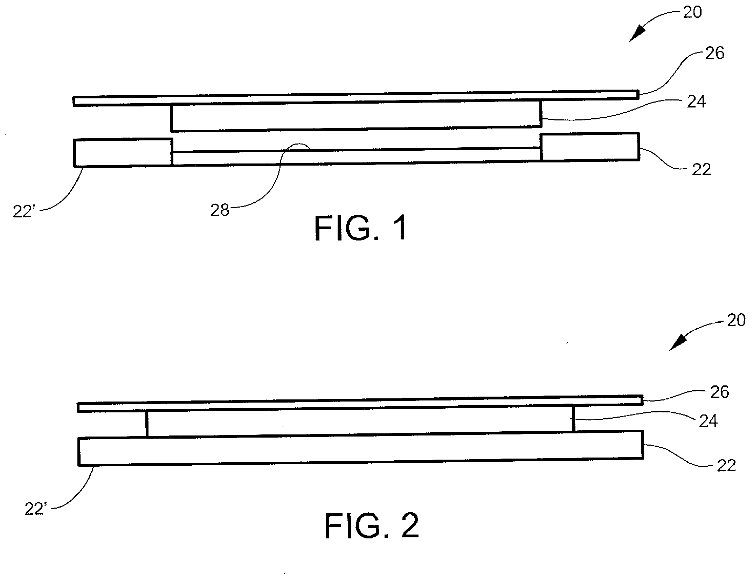

Referring to FIGs. 1-3, various examples of the foam-based RFID labels are shown at reference numerals 20,120, and each generally include an RFID device 24 disposed, encased, or sandwiched between one or more foam substrate(s) 22 and a face 26 material. The RFID device, such as a passive RFID device, generally includes an antenna and an IC.

Referring to FIGS. 1 and 2, the foam-based RFID label 20 includes a foam substrate layer 22, an RFID device 24, and a face layer 26. The RFID device 24 is disposed between/intermediate the foam substrate layer 22 (also referred to as a "foam layer", the foam layer, or the first foam layer herein) and the face layer 26. In a particular embodiment, the foam substrate layer 22 includes open cell foam such as reticulated foam, polyalklylene foam (e.g., either a polyethylene foam or polypropylene foam),polyurethane foam or open cell rubber, all of which are resiliently deformable and flexible allowing the RFID label to easily expand and contract when affixed to a tire without the label being torn and/or damaged and while concurrently maintaining operability of the RFID device disposed within the label such that the RFID device may communicate with an RFID reader identifying and sensing conditions of the article/vulcanized tire throughout the life of the article vulcanized tire. The foam substrate layer 22 can also include closed cell foam or at least one layer of open cell foam and/or closed cell foam in any layer arrangement. The foam substrate layer 22 can be in direct physical contact and adhesively bonded to the face layer 26. In one embodiment, the RFID device 24 encompasses less than the total surface area of the foam substrate layer 22 and the portion of the foam substrate layer 22 "outside of" or surrounding the RFID device 24 is adhesively bonded to the face layer26. The face layer26 can have a larger surface area than the foam substrate layer 22 such that portions of the face layer 26 overhang the underlying foam substrate layer 26. In certain aspects the face layer 26 comprises a planar layer of polyester and the RFID device 24 may further include a polyester planar substrate having an antenna and IC positioned therein. Although, the face layer26 and RFID device 24 may include polyesters that each aid in maintaining operability and readability of the RFID device, it should be further noted that the polyester comprising the face layer 26 (regardless of overall layer thickness) is preferably more rigid and strongerthan the polyester included in the RFID device to further protect and support the exterior of the label to prevent and/or reduce the likelihood of damage to the RFID device from external, physical stress(es). For example, the polyester of the face layer 26 maybe a thermo forming type of polyester typically used in tire cord while the polyester included RFID device may be chosen from a staple fiber or non-woven type of polyester. Polyester used within the RFID device is an excellent insulator due to its low outgassing rate and further aids in insulating and protecting the RFID capabilities of the RFID device. The face layer 26 and foam substrate layer 22 are bonded/adhered to one another. In certain aspects and in view of FIGs. 1, 2, 6, and 7, the outermost surface of foam substrate layer 22 further includes an adhesive and/or surface treatment 22' such that the label 20 maybe affixed directly within a recess 302 formed on the tire sidewall 301 or directly on tire sidewall 301. As shown in FIG. 2, the RFID device 24 may be positioned within a recess 28 formed in the foam substrate layer 22.

The foam-based RFID label 20 is preferably configured to be permanently affixed to the tire or other article. The terms "affix" or "affixed" as used herein refers to attaching, adhering or incorporating the label to or within or on an outer surface of the article. Affixed also includes embedding the label within the article such only the face layer 26 is visible on the finished article. For example, as shown in FIG. 6 and as previously discussed above, the label 20, 120 is disposed on the tire such that the face layer 26 is aligned flush with or slightly depressed relative to the tire sidewall 302.

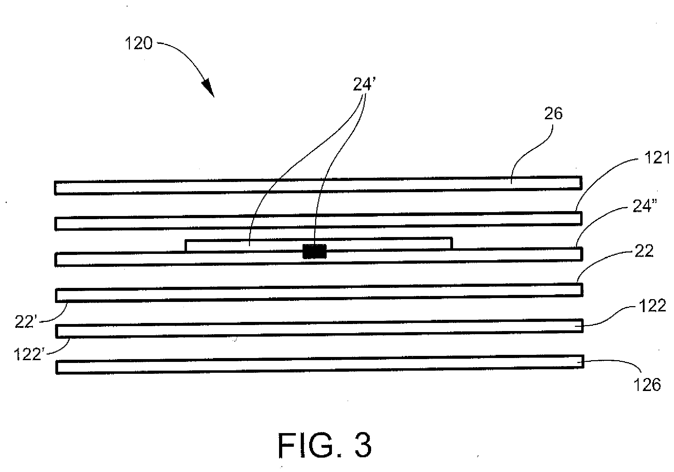

FIG. 3 depicts another foam-based RFID label 120 contemplated herein that includes the face layer 26 (e.g., made from and/or including polyester as discussed above in view of FIGs. 1 and 2), the RFID device 24, and a first foam substrate layer 22 (first foam layer). With regard to the RFID device 24, FIG. 3 further depicts the antenna and IC 24' positioned on a planar substrate 24" (also referred to as polyester planar substrate as previously discussed above in view of FIGs. 1 and 2) that is preferably made from and/or includes polyester with the RFID device configured to maintain operability between 300 MHz to 3 GHz to identify and/or sense conditions of a vulcanized tire and further communicates the same to an RFID reader when within a predetermined proximity of the RFID reader, and the face layer 26 formed of a polyester planar substrate that is more rigid than the polyester planar substrate of the RFID device. As further depicted in FIG. 3, the foam-based RFID label 120 further includes a first adhesive layer 121 between the face layer 26 and foam layer 22 that adhere the face layer 26 and foam layer 22 to one another and further encase the RFID device 24 therein. The foam-based RFID label 120 of FIG. 3 further includes a second foam layer 122 adhered to the foam layer 22 (first foam layer) by a second adhesive layer (e.g., 22') disposed between the two foam layers. In certain aspects, the second adhesive layer (not shown) is an adhesive coating that coats an outer surface of either the foam layer 22 or second foam layer 122, thus allowing foam layer and second foam layer 122 to be adhered to one another. A rubber adhesion layer coating 122' is further included on an outer surface of the second foam layer 122 that is opposite the second adhesive layer, the rubber adhesion layer is configured to adhere and permanently affix the foam-based RFID label to the vulcanized tire. The foam-based RFID label 120 further includes a removable liner 126 configured to be removed from the foam-based RFID label 120 before affixing the foam-based RFID label to the vulcanized tire. In certain aspects, each layer included within the labels 20, 120 of FIGs. 1-3 are substantially planar. Furthermore each foam layer disclosed herein may be a foam tape having a single-sided or double-sided adhesive applied thereon to adhere various layers of the labels 20, 120 as disclosed above.

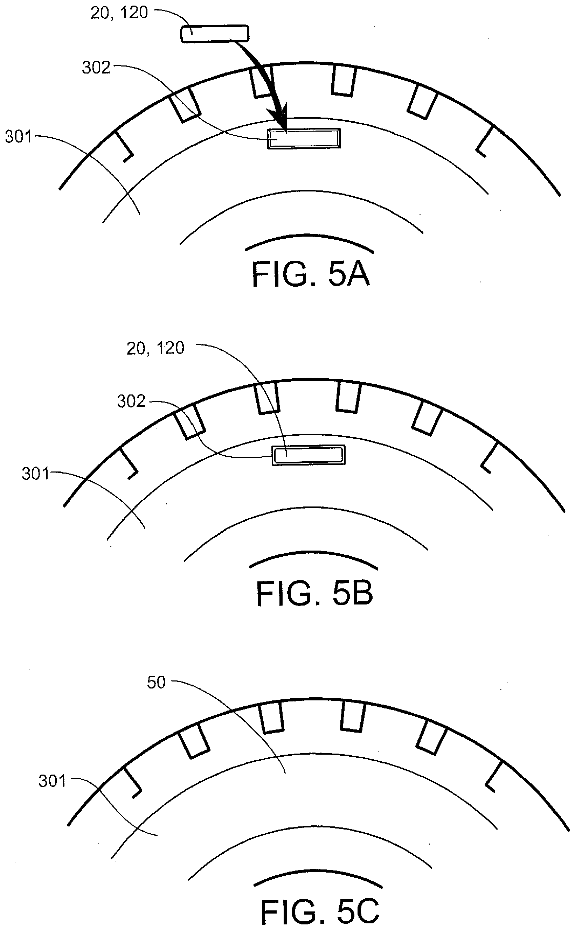

In view of the above disclosures, FIGs. 5A-5C sequentially depict methods of installing and using the foam-based RFID label(s) 20, 120 in or on a sidewall 301 of a vulcanized tire 300. As shown in FIG. 5A, the method includes forming either during vulcanization or post-vulcanization a recess 302 having a predetermined shape on an outermost or innermost surface of the tire (e.g., an outer sidewall 301 or an inner side wall (not shown) of tire 300). Next, at least one of the foam-based RFID labels 20, 120 that is configured to identify the tire and/or to sense conditions of the tire and communicate the same to an RFID reader when within a predetermined proximity of the RFID reader is provided. As further shown in FIG. 5B, the foam-based RFID labels 20, 120 are subsequently affixed within the recess 302 of the vulcanized tire 300 by contacting and adhering an adhesive surface of the foam-based RFID label to a surface of the recess 302 to subsequently identify the tire and/or sense conditions of the tire.

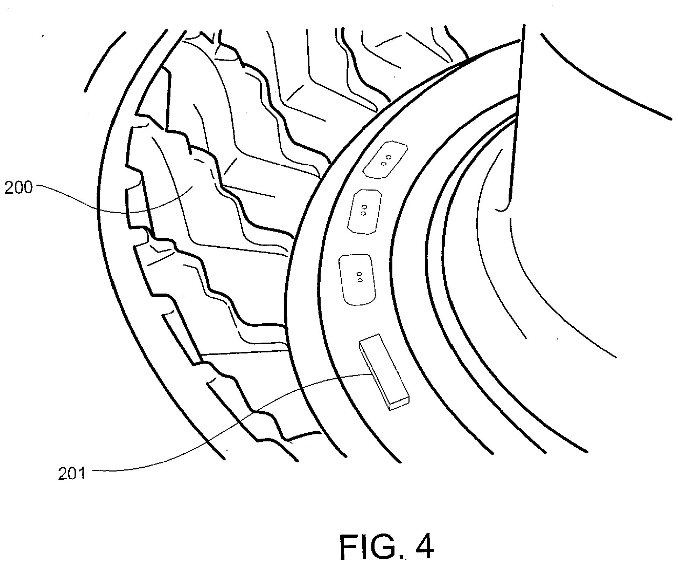

As further depicted in FIGs. 4, 5A, 5B, and 6, in certain aspects, the recess is formed during vulcanization by molding a predetermined shape within an outermost surface of a sidewall 302 of the tire. Referring specifically to FIG. 4, a tire mold 200 for molding and vulcanizing a "green", unvulcanized tire may be provided. Within the mold 200 of FIG. 4, plate 201 is further provided to form recess having a predetermined shape in tire sidewall 301 as shown for example in FIGs. 5B and 6. As shown in FIG. 5B, in certain aspects, the recess 302 is defined by/formed by a base, a plurality of connected sidewalls, and an opening formed opposite the base such that the recess has dimensions slightly larger than the label 20, 120 so that the label may be placed therein and affixed to the tire such that gaps/clearance exists between the sidewalls of the recess and the sides of the label. In other alternative aspects, the recess 302 is formed by milling an outermost surface of the tire into a predetermined shape, the recess formed by milling also having a base, a plurality of connected sidewalls, and an opening formed opposite the base that form a predetermined shape with the milled recess having dimensions slightly larger than the label 20, 120 so that the label may be placed therein and affixed to the tire.

As further shown in FIGs. 5B and 6, the adhesive surface of the foam-based RFID label is adhered to the base of the recess and completely positioned within the recess such that the face layer of the RFID device is either flush with or slightly depressed relative to other outermost surfaces 305, 306, 307, 308 of the sidewall that are immediately adjacent the recess. In certain aspects, the RFID device is flush with the other outermost surfaces of the sidewall of the tire. In certain aspects, RFID device is slightly depressed relative to other outermost surfaces of the sidewall of the tire

As further shown in FIGs. 5B and 5C, in certain aspects, it may be aesthetically desirable to conceal the RFID label within the tire. In this aspect and as further shown in FIG. 5C, a concealing composition 50 (e.g., an epoxy resin mixed with a colorant that matches the color of the article/tire or a rubber based resin - either a "green" rubber based resin or a curable rubber based resin) may be applied over the foam based RFID label to conceal and further encase the face layer of the foam based RFID label, as well as the all portions of the RFID label, within the tire. In each of the aspects discussed above, the RFID device preferably maintains RFID operability between 300 MHz to 3 GHz and identifies and/or senses conditions of the tire and further communicates the same to an RFID reader when within the predetermined proximity of the RFID reader.

The methods can include affixing one or more foam-based RFID labels to a rubber-based article, the label including an RFID component configured to provide a unique identifier or other information upon being read or otherwise interrogated. Once the label is affixed to the rubber-based article, the unique identifier is thus associated with that particular article. As further disclosed herein, in certain aspects, the inventive concepts further include a vulcanized tire having at least one of the disclosed foam-based RFID labels affixed thereon (e.g., within a recess of the tire sidewall or directly on top of the tire sidewall).

The article can be identified by use of an RFID reader as previously described herein. Identification of the article enables a wide array of applications to be performed such as tracking the article in a manufacturing or production system, monitoring the location of the article, performing inventory operations, etc.

The foregoing description provides examples.

## Claims

1. A method of installing a RFID label in or on a vulcanized tire (300), comprising the steps of:
(a) forming either during vulcanization or post-vulcanization a recess (302) having a predetermined shape on an outermost or innermost surface of a tire;
(b) providing a RFID label (20, 120) comprising a foam layer (22), a face layer (26) and a RFID device (24; 24', 24") disposed between the foam layer (22) and the face layer (26) that are adhered to one another, said RFID label (20), being configured to identify the tire and/or to sense conditions of the tire and communicate the same to an RFID reader when within a predetermined proximity of the RFID reader; and
(c) affixing the RFID label (20) within the recess of the vulcanized tire by contacting and adhering an adhesive surface of the RFID label to a surface of the recess to identify the tire and/or sense conditions of the tire.

2. The method of claim 1, wherein the recess is formed during vulcanization by molding a predetermined shape within an outermost surface of a sidewall (301) of the tire, the recess formed by a base, a plurality of connected sidewalls, and an opening formed opposite the base, and
wherein the adhesive surface of the RFID label is adhered to the base of the recess and completely positioned within the recess such that the face layer of the RFID label is flush with or slightly depressed relative to other outermost surfaces (305, 306, 307, 308) of the sidewall of the tire.

3. The method of claim 2, further comprising (d) applying a concealing composition over the RFID label to conceal the face layer of the RFID label within the tire.

4. The method of claim 2, wherein the RFID device maintains RFID operability between 300 MHz to 3 GHz and identifies and/or senses conditions of the tire and further communicates the same to an RFID reader when within the predetermined proximity of the RFID reader.

5. The method of claim 1, wherein the recess is formed by milling an outermost surface of the tire into a predetermined shape, the recess having a base, a plurality of connected sidewalls, and an opening formed opposite the base, and
wherein the adhesive surface of the RFID label is adhered to the base of the recess and completely positioned within the recess such that the face layer of the RFID label is flush with or slightly depressed relative to other outermost surfaces of the sidewall of the tire.

6. The method of claim 5, further comprising (d) applying a concealing composition over the RFID label to conceal the face layer of the RFID label within the tire.

7. The method of claim 5, wherein the RFID device maintains RFID operability between 300 MHz to 3 GHz and identifies and/or senses conditions of the tire and further communicates the same to an RFID reader when within a predetermined proximity of the RFID reader.

8. The method of claim 1, wherein the RFID label further comprises:
a first adhesive layer (121) between the face layer and foam layer that adhere the face layer and foam layer to one another and further encase the RFID device therein;
a second foam layer (122) adhered to the foam layer by a second adhesive layer disposed between the foam layers;
a rubber adhesion layer coating (122') an outer surface of the second foam layer that is opposite the second adhesive layer, the rubber adhesion layer configured to adhere and permanently affix the RFID label to the vulcanized tire; and
an optional removable liner (126) configured to be removed from the RFID label before affixing the RFID label to the vulcanized tire.

9. A vulcanized tire comprising a RFID label affixed within a recess of the vulcanized tire, wherein the RFID label comprises a foam layer (22), a face layer (26) and an RFID device (24) disposed between the foam layer and the face layer that are adhered to one another, the RFID device being configured to identify and/or sense conditions of a vulcanized tire and further configured to communicate the same to an RFID reader when within a predetermined proximity of the RFID reader.

10. The vulcanized tire of claim 9, wherein the RFID device includes a polyester planar substrate having an antenna and IC positioned therein with the RFID device configured to maintain operability between 300 MHz to 3 GHz to identify and/or sense conditions of a vulcanized tire and further communicates the same to an RFID reader when within a predetermined proximity of the RFID reader, and
the face layer formed of a polyester planar substrate that is more rigid than the polyester planar substrate of the RFID device.

11. The vulcanized tire of claim 10, wherein the RFID label further comprises
a first adhesive layer (121) between the face layer and foam layer that adhere the face layer and foam layer to one another and further encase the RFID device therein;
a second foam layer (122) adhered to the foam layer by a second adhesive layer disposed between the foam layers;
a rubber adhesion layer coating (122') an outer surface of the second foam layer that is opposite the second adhesive layer, the rubber adhesion layer configured to adhere and permanently affix the RFID label to the vulcanized tire; and
an optional removable liner (126) configured to be removed from the RFID label before affixing the RFID label to the vulcanized tire.

## Patentansprüche

1. Verfahren zum Anbringen eines RFID-Etiketts in oder an einem vulkanisierten Reifen (300), umfassend die Schritte:
(a) während Vulkanisation oder nach Vulkanisation Bilden einer Vertiefung (302) mit einer vorgegebenen Form an einer am weitesten außen liegenden oder am weitesten innen liegenden Oberfläche eines Reifens;
(b) Bereitstellen eines RFID-Etiketts (20, 120), das eine Schaumstoffschicht (22), eine Deckschicht (26) und eine RFID-Vorrichtung (24; 24', 24"), die zwischen der Schaumstoffschicht (22) und der Deckschicht (26) angeordnet ist, die aneinander haften, umfasst, wobei das RFID-Etikett (20) dafür gestaltet ist, den Reifen zu identifizieren und/oder Zustände des Reifens zu erfassen und diese an eine RFID-Lesevorrichtung, wenn innerhalb einer vorgegebenen Umgebung der RFID-Lesevorrichtung, zu übermitteln; und
(c) Befestigen des RFID-Etiketts (20) in der Vertiefung des vulkanisierten Reifens durch Inkontaktbringen und Anhaften einer Haftfläche des RFID-Etiketts an eine Oberfläche der Vertiefung, um den Reifen zu identifizieren und/oder Zustände des Reifens zu erfassen.

2. Verfahren gemäß Anspruch 1, wobei die Vertiefung während Vulkanisation durch Formen einer vorgegebenen Form in eine am weitesten außen liegende Oberfläche einer Seitenwand (301) des Reifens gebildet wird, wobei die Vertiefung von einer Basis, einer Vielzahl von verbundenen Seitenwänden und einer gegenüber der Basis gebildeten Öffnung gebildet wird, und
wobei die Haftfläche des RFID-Etiketts an die Basis der Vertiefung gehaftet wird und vollständig innerhalb der Vertiefung angeordnet ist, so dass die Deckschicht des RFID-Etiketts mit anderen am weitesten außen liegenden Oberflächen (305, 306, 307, 308) der Seitenwand des Reifens bündig oder relativ dazu leicht zurückgesetzt ist.

3. Verfahren gemäß Anspruch 2, ferner umfassend (d) Aufbringen einer verdeckenden Zusammensetzung über das RFID-Etikett, um die Deckschicht des RFID-Etiketts innerhalb des Reifens zu verdecken.

4. Verfahren gemäß Anspruch 2, wobei die RFID-Vorrichtung RFID-Funktionsfähigkeit zwischen 300 MHz und 3 GHz aufrechthält und den Reifen identifiziert und/oder Zustände davon erfasst und diese ferner an eine RFID-Lesevorrichtung, wenn innerhalb der vorgegebenen Umgebung der RFID-Lesevorrichtung, übermittelt.

5. Verfahren gemäß Anspruch 1, wobei die Vertiefung durch Fräsen einer am weitesten außen liegenden Oberfläche des Reifens zu einer vorgegebenen Form gebildet wird, wobei die Vertiefung eine Basis, eine Vielzahl von verbundenen Seitenwänden und eine gegenüber der Basis gebildete Öffnung aufweist, und
wobei die Haftfläche des RFID-Etiketts an die Basis der Vertiefung gehaftet wird und vollständig innerhalb der Vertiefung angeordnet ist, so dass die Deckschicht des RFID-Etiketts mit anderen am weitesten außen liegenden Oberflächen der Seitenwand des Reifens bündig oder relativ dazu leicht zurückgesetzt ist.

6. Verfahren gemäß Anspruch 5, ferner umfassend (d) Aufbringen einer verdeckenden Zusammensetzung über das RFID-Etikett, um die Deckschicht des RFID-Etiketts innerhalb des Reifens zu verdecken.

7. Verfahren gemäß Anspruch 5, wobei die RFID-Vorrichtung RFID-Funktionsfähigkeit zwischen 300 MHz und 3 GHz aufrechthält und den Reifen identifiziert und/oder Zustände davon erfasst und diese ferner an eine RFID-Lesevorrichtung, wenn innerhalb einer vorgegebenen Umgebung der RFID-Lesevorrichtung, übermittelt.

8. Verfahren gemäß Anspruch 1, wobei das RFID-Etikett ferner umfasst:
eine erste Haftschicht (121) zwischen der Deckschicht und der Schaumstoffschicht, die die Deckschicht und die Schaumstoffschicht aneinander haftet und ferner die RFID-Vorrichtung darin einschließt;
eine zweite Schaumstoffschicht (122), die durch eine zweite Haftschicht, die zwischen den Schaumstoffschichten angeordnet ist, an der Schaumstoffschicht haftet;
eine Kautschuk-Haftbeschichtung (122') auf einer Außenfläche der zweiten Schaumstoffschicht, die der zweiten Haftschicht gegenüberliegt, wobei die Kautschuk-Haftschicht dafür gestaltet ist, das RFID-Etikett an den vulkanisierten Reifen zu haften und dauerhaft daran zu befestigen; und
einen optionalen entfernbaren Liner (126), der dafür gestaltet ist, vor dem Befestigen des RFIF-Etiketts an den vulkanisierten Reifen von dem RFID-Etikett entfernt zu werden.

9. Vulkanisierter Reifen, umfassend ein RFID-Etikett, das in einer Vertiefung des vulkanisierten Reifens befestigt ist, wobei das RFID-Etikett eine Schaumstoffschicht (22), eine Deckschicht (26) und eine RFID-Vorrichtung (24), die zwischen der Schaumstoffschicht und der Deckschicht angeordnet ist, die aneinander haften, umfasst, wobei die RFID-Vorrichtung dafür gestaltet ist, einen vulkanisierten Reifen zu identifizieren und/oder Zustände davon zu erfassen und ferner dafür gestaltet ist, diese an eine RFID-Lesevorrichtung, wenn innerhalb einer vorgegebenen Umgebung der RFID-Lesevorrichtung, zu übermitteln.

10. Vulkanisierter Reifen gemäß Anspruch 9, wobei die RFID-Vorrichtung ein planares Polyestersubstrat umfasst, das eine Antenne und einen IC darin angeordnet aufweist, wobei die RFID-Vorrichtung dafür gestaltet ist, Funktionsfähigkeit zwischen 300 MHz und 3 GHz aufrechtzuhalten, um einen vulkanisierten Reifen zu identifizieren und/oder Zustände davon zu erfassen und diese ferner an eine RFID-Lesevorrichtung, wenn innerhalb einer vorgegebenen Umgebung der RFID-Lesevorrichtung, zu übermitteln, und
die Deckschicht aus einem planaren Polyestersubstrat gebildet ist, das steifer als das planare Polyestersubstrat der RFID-Vorrichtung ist.

11. Vulkanisierter Reifen gemäß Anspruch 10, wobei das RFID-Etikett ferner umfasst:
eine erste Haftschicht (121) zwischen der Deckschicht und der Schaumstoffschicht, die die Deckschicht und die Schaumstoffschicht aneinander haftet und ferner die RFID-Vorrichtung darin einschließt;
eine zweite Schaumstoffschicht (122), die durch eine zweite Haftschicht, die zwischen den Schaumstoffschichten angeordnet ist, an der Schaumstoffschicht haftet;
eine Kautschuk-Haftbeschichtung (122') auf einer Außenfläche der zweiten Schaumstoffschicht, die der zweiten Haftschicht gegenüberliegt, wobei die Kautschuk-Haftschicht dafür gestaltet ist, das RFID-Etikett an den vulkanisierten Reifen zu haften und dauerhaft daran zu befestigen; und
einen optionalen entfernbaren Liner (126), der dafür gestaltet ist, vor dem Befestigen des RFID-Etiketts an den vulkanisierten Reifen von dem RFID-Etikett entfernt zu werden.

## Revendications

1. Procédé d'installation d'une étiquette RFID dans ou sur un pneumatique vulcanisé (300), comprenant les étapes qui consistent à :
(a) former soit pendant la vulcanisation, soit après la vulcanisation, un creux (302) ayant une forme prédéterminée sur une surface située tout à l'extérieur ou située tout à l'intérieur d'un pneumatique ;
(b) fournir une étiquette RFID (20, 120) comprenant une couche de mousse (22), une couche extérieure (26) et un dispositif RFID (24 ; 24', 24") disposé entre la couche de mousse (22) et la couche extérieure (26) qui sont collées l'une sur l'autre, ladite étiquette RFID (20) étant configurée pour identifier le pneumatique et/ou pour détecter des états du pneumatique et les communiquer à un lecteur RFID lorsqu'elle se trouve à l'intérieur d'une proximité prédéterminée du lecteur RFID ; et
(c) apposer l'étiquette RFID (20) à l'intérieur du creux du pneumatique vulcanisé en mettant en contact une surface adhésive de l'étiquette RFID avec une surface du creux et en la collant sur ladite surface pour identifier le pneumatique et/ou détecter des états du pneumatique.

2. Procédé selon la revendication 1, dans lequel le creux est formé durant la vulcanisation par moulage d'une forme prédéterminée à l'intérieur d'une surface située tout à l'extérieur d'un flanc (301) du pneumatique, le creux étant formé d'une base, d'une pluralité de parois latérales connectées, et d'une ouverture formée en face de la base, et
dans lequel la surface adhésive de l'étiquette RFID est collée sur la base du creux et entièrement positionnée à l'intérieur du creux de telle sorte que la couche extérieure de l'étiquette RFID soit de niveau avec ou légèrement enfoncée par rapport aux autres surfaces situées tout à l'extérieur (305, 306, 307, 308) du flanc du pneumatique.

3. Procédé selon la revendication 2, comprenant en outre (d) l'application d'une composition de dissimulation par-dessus l'étiquette RFID pour dissimuler la couche extérieure de l'étiquette RFID à l'intérieur du pneumatique.

4. Procédé selon la revendication 2, dans lequel le dispositif RFID conserve une fonctionnalité RFID entre 300 MHz et 3 GHz et identifie et/ou détecte des états du pneumatique et les communique en outre à un lecteur RFID lorsqu'il se trouve à l'intérieur de la proximité prédéterminée du lecteur RFID.

5. Procédé selon la revendication 1, dans lequel le creux est formé par fraisage d'une surface située tout à l'extérieur du pneumatique pour produire une forme prédéterminée, le creux ayant une base, une pluralité de parois latérales connectées, et une ouverture formée en face de la base, et
dans lequel la surface adhésive de l'étiquette RFID est collée sur la base du creux et entièrement positionnée à l'intérieur du creux de telle sorte que la couche extérieure de l'étiquette RFID soit de niveau avec ou légèrement enfoncée par rapport aux autres surfaces situées tout à l'extérieur du flanc du pneumatique.

6. Procédé selon la revendication 5, comprenant en outre (d) l'application d'une composition de dissimulation par-dessus l'étiquette RFID pour dissimuler la couche extérieure de l'étiquette RFID à l'intérieur du pneumatique.

7. Procédé selon la revendication 5, dans lequel le dispositif RFID conserve une fonctionnalité RFID entre 300 MHz et 3 GHz et identifie et/ou détecte des états du pneumatique et les communique en outre à un lecteur RFID lorsqu'il se trouve à l'intérieur d'une proximité prédéterminée du lecteur RFID.

8. Procédé selon la revendication 1, dans lequel l'étiquette RFID comprend en outre :
une première couche adhésive (121) entre la couche extérieure et la couche de mousse qui colle la couche extérieure et la couche de mousse l'une sur l'autre et y enferme davantage le dispositif RFID ;
une deuxième couche de mousse (122) collée sur la couche de mousse par une deuxième couche adhésive disposée entre les couches de mousse ;
un revêtement formant une couche d'adhérence sur caoutchouc (122') sur une surface extérieure de la deuxième couche de mousse qui est opposée à la deuxième couche adhésive, la couche d'adhérence sur caoutchouc étant configurée pour coller et apposer de façon permanente l'étiquette RFID sur le pneumatique vulcanisé ; et
une doublure amovible optionnelle (126) configurée pour être retirée de l'étiquette RFID avant l'apposition de l'étiquette RFID sur le pneumatique vulcanisé.

9. Pneumatique vulcanisé comprenant une étiquette RFID apposée à l'intérieur d'un creux du pneumatique vulcanisé, dans lequel l'étiquette RFID comprend une couche de mousse (22), une couche extérieure (26) et un dispositif RFID (24) disposé entre la couche de mousse et la couche extérieure qui sont collées l'une sur l'autre, le dispositif RFID étant configuré pour identifier et/ou détecter des états d'un pneumatique vulcanisé et configuré en outre pour les communiquer à un lecteur RFID lorsqu'il se trouve à l'intérieur d'une proximité prédéterminée du lecteur RFID.

10. Pneumatique vulcanisé selon la revendication 9, dans lequel le dispositif RFID comprend un substrat plat en polyester comportant une antenne et un circuit intégré positionné à l'intérieur, le dispositif RFID étant configuré pour rester fonctionnel entre 300 MHz et 3 GHz pour identifier et/ou détecter des états d'un pneumatique vulcanisé et les communiquant en outre à un lecteur RFID lorsqu'il se trouve à l'intérieur d'une proximité prédéterminée du lecteur RFID, et
la couche extérieure étant formée d'un substrat plat en polyester qui est plus rigide que le substrat plat en polyester du dispositif RFID.

11. Pneumatique vulcanisé selon la revendication 10, dans lequel l'étiquette RFID comprend en outre :
une première couche adhésive (121) entre la couche extérieure et la couche de mousse qui colle la couche extérieure et la couche de mousse l'une sur l'autre et y enferme davantage le dispositif RFID ;
une deuxième couche de mousse (122) collée sur la couche de mousse par une deuxième couche adhésive disposée entre les couches de mousse ;
un revêtement formant une couche d'adhérence sur caoutchouc (122') sur une surface extérieure de la deuxième couche de mousse qui est opposée à la deuxième couche adhésive, la couche d'adhérence sur caoutchouc étant configurée pour coller et apposer de façon permanente l'étiquette RFID sur le pneumatique vulcanisé ; et
une doublure amovible optionnelle (126) configurée pour être retirée de l'étiquette RFID avant l'apposition de l'étiquette RFID sur le pneumatique vulcanisé.
